**Europäisches Patentamt**

**European Patent Office**

**Office européen des brevets**

(19)

(11) Veröffentlichungsnummer : **0 359 999 B1**

(12) **EUROPÄISCHE PATENTSCHRIFT**

(45) Veröffentlichungstag der Patentschrift :
**15.04.92 Patentblatt 92/16**

(21) Anmeldenummer : **89115166.4**

(22) Anmeldetag : **17.08.89**

(51) Int. Cl.⁵ : **F16K 27/04**

(54) **Wassermischventil.**

(30) Priorität : **09.09.88 DE 3830700**

(43) Veröffentlichungstag der Anmeldung :
**28.03.90 Patentblatt 90/13**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI NL SE**

(56) Entgegenhaltungen :
**DE-U- 8 627 223**
**FR-A- 2 193 947**

(73) Patentinhaber : **FRIEDRICH GROHE**
**AKTIENGESELLSCHAFT**
**Hauptstrasse 137**
**W-5870 Hemer (DE)**

(72) Erfinder : **Gnauert, Werner**
**Burggräfte 25**
**W-5860 Iserlohn (DE)**
Erfinder : **Titze, Horst**
**Malmkestrasse 18**
**W-5800 Hagen (DE)**

## Beschreibung

Die Erfindung betrifft ein Wassermischventil mit den im Oberbegriff des Anspruchs 1 angegebenen Merkmalen. Ein Mischventil dieser Gattung ist aus der Druckschrift DE-A-33 39 464 bekannt. Bei dem bekannten Mischventil sind in dem Boden des Sondergehäuses zwei Eintrittsöffnungen für Kalt- und Warmwasser und eine Austrittsöffnung für Mischwasser angeordnet. An den zylindrischen Wandungen sind schlauchförmige Dichtungen ausgebildet, die einerseits an der Stirnseite der Ventilsitzscheibe und andererseits in einer Ausnehmung der Sanitärarmatur mit ihren Stirnseiten eine Abdichtung bewirken. Bei einer Druckbeaufschlagung des Wassermischventils durch das anstehende Wasser erfolgt ein leichtes axiales Verschieben des Ventilscheibenpaketes in Richtung auf das Ventilbetätigungsglied, so daß hierdurch ein Spalt zwischen dem Bodenteil des Sondergehäuses und der Ventilsitzscheibe entsteht. Durch diesen Spalt zwischen Boden und Ventilsitzscheibe wird die radiale Stützung der jeweiligen schlauchförmigen Dichtung erheblich verringert, so daß bei einem Druckstoß (Wasserschlag) in der Wasserversorgungsleitung der Dichtring in den Spalt gepreßt werden kann und eine Beschädigung der Dichtung bzw. sogar ein Undichtwerden der Armatur auftreten kann.

Der Erfindung liegt die Aufgabe zugrunde, das im Oberbegriff des Anspruchs 1 angegebene Wassermischventil mit einfachen Mitteln so auszubilden, daß eine Spaltbildung zwischen der Ventilsitzscheibe und dem axial verschiebbaren Boden des Gehäuses bei Druckbelastung vermieden wird.

Diese Aufgabe wird erfindungsgemäß dadurch gelöst, daß der Boden an den Wandungen der Öffnungen für die Wasserzuführung im Bereich der der Ventilsitzscheibe zugekehrten Seite je eine, diese Öffnungen für die Wasserzuführung verringerude Einschnürung hat. Durch das Einbringen einer umlaufenden Einschnürung in den Boden des Sondergehäuses wird erreicht, daß bei Druckbeaufschlagung eine Kraftkomponente in axialer Richtung auf den Boden wirkt und somit der Boden immer gegen die Ventilsitzscheibe gedrückt wird. Bei einem Zusammenpressen des Ventilscheibenpakets wird somit der Boden in gleicher Weise in die topfförmige Hülse mit hineingedrückt. Das permanente Anliegen des Bodens an der Steuerscheibe verhindert ein Ausweichen bzw. Eindringen der schlauchförmigen Dichtung in einen Spalt in diesem Bereich. Auf der gegenüberliegenden Stirnseite wird die Dichtung von einer ringförmigen Ausnehmung in dem Sanitärarmaturenkörper gestützt, so daß ein Spalt zwischen dem Boden und dem Sanitärarmaturenkörper unerheblich ist, wie durch Versuche ermittelt worden ist.

Durch den erfindungsgemäßen Boden ist die relativ aufwendige und zusätzliche Kosten verursachende Ausbildung einer entsprechenden ringförmigen Ausnehmung in der Ventilsitzscheibe, die aus Hartstoff, meist aus Keramikwerkstoff besteht, nicht erforderlich.

Weitere Ausgestaltungen der Erfindung sind in den Ansprüchen 2 bis 6 angegeben.

Zweckmäßig kann die Einschnürung sprungartig, mit einer relativ spitzen, vorkragenden Kante ausgebildet werden, wodurch eine gute Mitnahme durch die halbrund geformte Stirnseite der Dichtung erreicht wird. Andererseits kann aber auch eine konische Ausbildung der Einschnürung vorgesehen werden, die eine schonende Halterung der Dichtung ermöglicht.

Ein Ausführungsbeispiel der Erfindung ist in der Zeichnung dargestellt und wird im folgenden näher erläutert. Es zeigt

Figur 1 ein in einem Sondergehäuse angeordnetes Mischventil in Seitenansicht teilweise geschnitten;

Figur 2 eine Druntersicht des Mischventils gemäß Figur 1 mit dem Boden;

Figur 3 einen Teilschnitt des Mischventils gemäß Figur 1 im eingebauten Zustand in einer Sanitärarmatur in vergrößertem Maßstab;

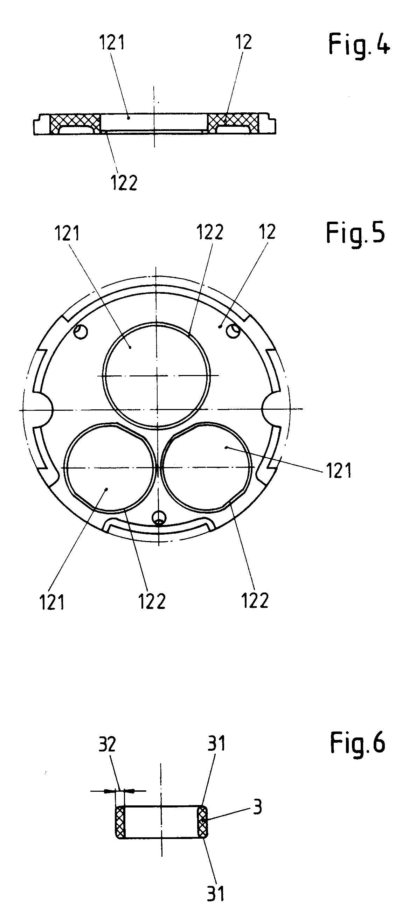

Figur 4 den Boden gemäß Figur 1 im Schnitt;

Figur 5 den Boden gemäß Figur 4 in Draufsicht;

Figur 6 eine Dichtung gemäß Figur 2 im Schnitt.

Das in der Zeichnung dargestellte Wassermischventil ist in einem Sondergehäuse 1 angeordnet und kann als Baueinheit in einen entsprechend ausgebildeten Sanitärarmaturenkörper 2 eingefügt werden. Das Sondergehäuse 1 besteht aus einer topfartigen Hülse 11 und einem axial in die Hülse 11 einschiebbaren Boden 12. In dem Sondergehäuse 1 ist eine im wesentlichen ortsfest gehaltene Ventilsitzscheibe 15 angeordnet, auf der eine mit einem Betätigungsorgan 13 verschiebbare Regelscheibe 14 gelagert ist. In der Ventilsitzscheibe 15 ist jeweils eine Durchtrittsöffnung für Kalt- und Warmwasser und eine Auslaßöffnung für Mischwasser ausgebildet. Mit Hilfe eines in der Regelscheibe 14 ausgebildeten Überströmkanals 141 können diese Öffnungen in Abhängigkeit von der Stellung der Regelscheibe 14 mehr oder weniger in Überdeckung gebracht werden und somit die Durchflußmenge und das Mischungsverhältnis von Kalt- und Warmwasser bestimmt werden.

Der Ventilsitzscheibe 15 ist der Boden 12 des Sondergehäuses 1 unmittelbar vorgelagert und weist entsprechende Öffnungen 121 für den Wasserdurchtritt auf. In dem der Ventilsitzscheibe 15 zugekehrten Bereich der Wandungen der Öffnungen 121 ist jeweils eine Einschnürung 122 ausgebildet, die sprungartig etwa 0,3 mm vor der Stirnseite des Bodens 12 etwa 0,4 mm den Durchmesser verringert. Die Einschnürung 122 weist somit eine in die Öffnung 121 vorkragende, umlaufende Kante auf. In den Öffnungen 121 sind außerdem schlauchförmige Dichtungen 3 aus gummielastischem Material angeordnet. Die Dichtungen 3 weisen dabei halbrundförmig ausgebildete Stirnflächen 31 auf und haben eine Wandstärke 32 von etwa 1,5 mm.

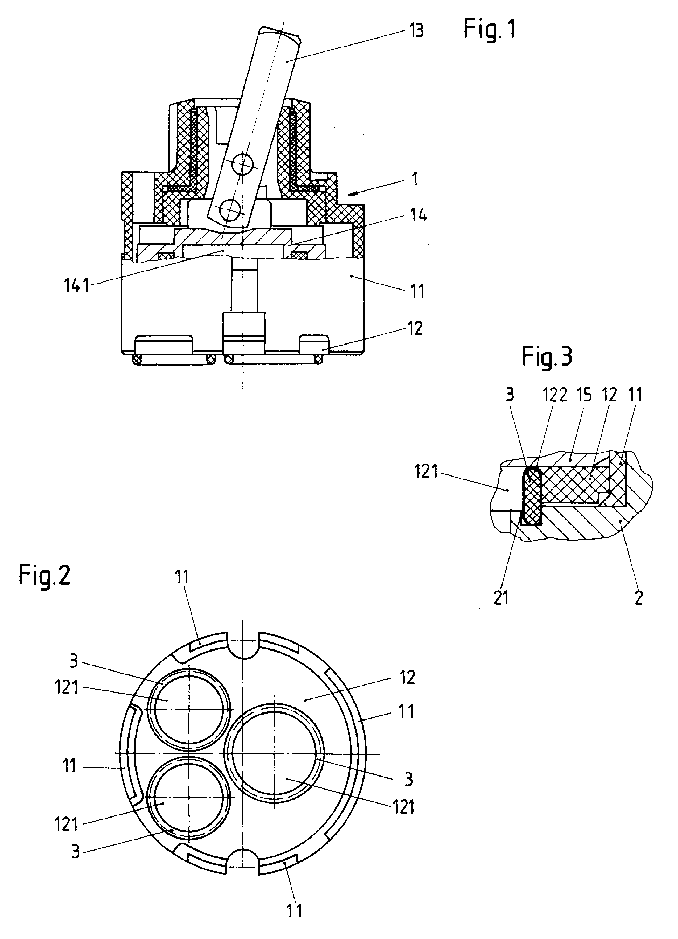

Wie es insbesondere aus Figur 3 ersichtlich ist, stützt sich der Dichtring 3 im Bereich seiner halbrundförmig ausgebildeten Stirnseite an der Einschnürung 122 ab und bewirkt so bei einer Druckbeaufschlagung des Mischventils, daß der Boden 12 zusammen mit der Ventilsitzscheibe 15 in die topfartige Hülse 11 gedrückt wird. Eine Spaltausbildung zwischen Ventilsitzscheibe 15 und Boden 12 wird somit vermieden. Der durch die Ventilscheibenzusammenpressung entstehende Spalt zwischen Sanitärarmaturenkörper 2 und dem Boden 12 ist unschädlich, da die Dichtung 3 in diesem Bereich in einer ringförmigen Ausnehmung 21 des Sanitärarmaturenkörpers 2 gestützt wird.

Die beiden im Durchmesser kleineren Öffnungen 121 sind für die Zuführung von Kalt- und Warmwasser vorgesehen, wenn die Warmwasserbereitung von einer zentralen Anlage erfolgt. Die Öffnung 121 mit dem größeren Durchmesser dient dann dem Ablauf des erzeugten Mischwassers. Wird dagegen das Warmwasser von einem drucklosen Warmwasserüberlaufspeicher bezogen, so erfolgt die Zuführung des Kaltwassers über die Öffnung 121 mit dem großen Durchmesser, während die Abführung in Teilströmen durch die Öffnungen 121 mit kleinem Durchmesser erfolgt. Hierbei wird der eine Teilstrom von Kaltwasser dem Warmwasserüberlaufspeicher zugeführt und eine entsprechende Menge Warmwasser vom Warmwasserspeicher der Sanitärarmatur wieder zugeführt, während der andere Teilstrom direkt in die Sanitärarmatur abgegeben wird, wo sich die beiden Teilströme mischen und temperiertes Wasser erzeugen.

Dadurch, daß alle drei Öffnungen 121 mit einer Einschnürung 122 versehen sind, kann das als Baueinheit ausgebildete Wassermischventil sowohl in Sanitärarmaturen, bei denen eine zentrale Warmwasserbereitung als auch bei denen eine Warmwasserbereitung über einen drucklosen Überlaufwarmwasserspeicher erfolgt, eingesetzt werden.

**Patentansprüche**

1. Wassermischventil mit einem in Sanitärarmaturen einsetzbaren Sondergehäuse (1) oder kartusche, das aus einer topfartigen Hülse (11) und einem die Öffnungen (121) für den Wasserdurchtritt aufweisenden, axial in die Hülse (11) schiebbaren boden (12) besteht, wobei das Mischventil von wenigstens einer, im wesentlichen unbeweglich gehalterten Ventilsitzscheibe (15) und einer an der Ventilsitzscheibe (15) angelagerten, mit Hilfe eines betätigungsorgans (13) verschiebbaren Regelscheibe (14) gebildet ist und in den Öffnungen (121) jeweils schlauchförmige Dichtungen (3) aus gummielastischem Material zur Abdichtung zwischen der Ventilsitzscheibe (15) und dem Sanitärarmaturenkörper (2) angeordnet sind, dadurch gekennzeichnet, daß der Boden (12) an den Wandungen der Öffnungen (121) für die Wasserzuführung im Bereich der der Ventilsitzscheibe (15) zugekehrten Seite je eine, diese Öffnungen (121) für die Wasserzuführung verringernde Einschnürung (122) aufweist.

2. Wassermischventil nach Anspruch 1, dadurch gekennzeichnet, daß die Einschnürung (122) sprungartig ausgebildet ist und eine relativ spitze, vorkragende kante aufweist.

3. Wassermischventil nach Anspruch 1, dadurch gekennzeichnet, daß die Einschnürung (122) kegelförmig ausgebildet ist.

4. Wassermischventil nach einem der Ansprüche 1 bis 3, dadurch gekennzeichnet, daß sowohl an den Öffnungen (121) für den Wasserzulauf als auch für den Wasserauslaß die Einschnürungen (122) ausgebildet sind.

5. Wassermischventil nach einem der Ansprüche 1, 2 oder 4, dadurch gekennzeichnet, daß die Einschnürung (122) etwa 0,3 mm vor der der Ventilsitzscheibe (15) zugekehrten Stirnseite des Bodens (12) beginnt und etwa 0,4 mm Durchmesserverringerung der Öffnung aufweist, wobei die schlauchartige Dichtung (3) eine Wandstärke (32) von etwa 1,5 mm aufweist und wenigstens die der Ventilsitzscheibe (15) zugekehrte Stirnfläche (31) der Dichtung (3) im Querschnitt halbrund ausgebildet ist.

6. Wassermischventil nach einem der Ansprüche 1 bis 5, dadurch gekennzeichnet, daß die Einschnürung (122) im Abstand von etwa 0,2 der Wandstärke (32) der Dichtung (3) vor der der Ventilsitzscheibe (15) zugekehrten Stirnseite des Bodens (12) sprungartig beginnt und eine Durchmesserreduzierung von etwa 0,27 der Wandstärke (32) der Dichtung (3) aufweist, wobei die Stirnflächen (31) der Dichtung (3) im Querschnitt halbrund ausgebildet sind.

**Claims**

1. Water mixing valve having a separate housing (1) or casing arranged to be inserted in plumbing fittings, which housing consists of a cup-shaped sleeve (11) and a base (12) which has openings (121) for the passage of water and is capable of being slid axially into the sleeve (11), the mixing valve being formed by at least one substantially immovably mounted valve seat disc (15) and a control disc (14) mounted on the valve seat disc (15) and capable of being displaced with the help of an actuating member (13), and tubular seals (3) of rubber-elastic material being arranged in the openings (121) to form a seal between the valve seat disc (15) and the plumbing fitting body (2), characterized in that, at the walls of the openings (121) for the supply of water, in the region of the side facing towards the valve seat disc (15), the base (12) has respective constrictions (122) reducing these openings (121) for the supply of water.

2. A water-mixing valve according to claim 1, characterized in that the constriction (122) is abrupt and has a relatively acute, projecting edge.

3. A water-mixing valve according to claim 1, characterized in that the constriction (122) is conical.

4. A water-mixing valve according to one of claims 1 to 3, characterized in that the constrictions (122) are formed both at the openings (121) for the intake of water and for the discharge of water.

5. A water-mixing valve according to one of claims 1, 2 or 4, characterized in that the constriction (122) starts about 0.3 mm before the end face of the base (12) facing towards the valve seat disc (15) and has a reduction in diameter of the opening of about 0.4 mm, the tubular seal (3) having a wall thickness (32) of about 1.5 mm and at least the end face (31) of the seal (3) facing towards the valve seat disc (15) being of semi-circular form in cross-section.

6. A water-mixing valve according to one of claims 1 to 5, characterized in that the constriction (122) starts abruptly, at a distance of about 0.2 of the wall thickness (32) of the seal (3) in front of the end face of the base (12) facing towards the valve seat disc (15) and has a reduction in diameter of about 0.27 of the wall thickness (32) of the seal (3), and the end faces (31) of the seal (3) are of semicircular form in cross-section.

## Revendications

1. Mélangeur d'eau comportant un boîtier (1) particulier ou une cartouche susceptibles d'être logés dans un robinet à usage sanitaire, et qui se compose d'un manchon (11) en forme de pot et un fond (12) coulissant axialement dans le manchon (11) et comportant des orifices (121) pour le passage de l'eau, le mélangeur étant formé d'au moins un disque de siège de soupape (15) maintenu pratiquement immobile et d'un disque de réglage (14) appliqué sur le disque (15) formant siège de soupape et pouvant coulisser à l'aide d'un organe de manoeuvre (13), les orifices (121) comportant des joints (3) tubulaires respectifs en une matière élastique comme du caoutchouc pour assurer l'étanchéité entre le disque (15) formant siège de soupape et le corps du robinet (2), mélangeur, caractérisé en ce qu'au niveau des parois des ouvertures (121) du fond (12) pour l'arrivée de l'eau, du côté tourné vers le disque (15) formant siège de soupape, chacune des ouvertures (121) comporte un rétrécissement (122) diminuant le passage de l'eau.

2. Mélangeur selon la revendication 1, caractérisé en ce que le rétrécissement (122) est en forme de gradin et présente un bord en saillie relativement accentué.

3. Mélangeur selon la revendication 1, caractérisé en ce que le rétrécissement (122) est tronconique.

4. Mélangeur selon l'une des revendications 1 à 3, caractérisé en ce qu'à la fois les orifices (121) d'arrivée d'eau ainsi que ceux de sortie d'eau comportent un rétrécissement (122).

5. Mélangeur selon l'une des revendications 1, 2 ou 4, caractérisé en ce que le rétrécissement (122) commence sensiblement à 0,3 mm en avant de la face frontale du fond (12) tournée vers le disque (15) formant siège de soupape et correspond sensiblement à une réduction de 0,4 mm du diamètre de l'ouverture, le joint (3) en forme de tuyau ayant une épaisseur de paroi (32) de l'ordre de 1,5 mm et au moins la surface frontale (31) du joint (3) tournée vers le disque (15) formant siège de soupape présente une section semi-circulaire.

6. Mélangeur selon l'une des revendications 1 à 5, caractérisé en ce que le rétrécissement (122) commence avec une forme de gradin représentant environ 0,2 mm de l'épaisseur de paroi (32) du joint (3), en avant de la face frontale du fond (12) tournée vers le disque (15) formant siège de soupape et donne une réduction de diamètre d'environ 0,27 mm de l'épaisseur de paroi (32) du joint (3), la surface frontale (31) du joint (3) ayant une section semi-circulaire.

Fig.1

Fig.3

Fig.2

Fig.4

Fig.5

Fig.6